(19) Europäisches Patentamt
European Patent Office
Office européen des brevets

(11) EP 4 542 450 A1

(12) EUROPEAN PATENT APPLICATION

(43) Date of publication:
23.04.2025 Bulletin 2025/17

(51) International Patent Classification (IPC):
G06N 3/098 (2023.01)

(21) Application number: 23204429.7

(52) Cooperative Patent Classification (CPC):
G06N 3/098

(22) Date of filing: 18.10.2023

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Siemens Aktiengesellschaft
80333 München (DE)

(72) Inventors:
• Hegazy, Shady
91052 Erlangen (DE)
• Elsner, Christoph
91052 Erlangen (DE)

(74) Representative: Siemens Patent Attorneys
Postfach 22 16 34
80506 München (DE)

(54) METHOD OF TRAINING A GRAPH NEURONAL NETWORK TO DERIVE AN INFERENCE ABOUT OPERATIONS IN AN INDUSTRIAL SYSTEM COM-PRISING A PLURALITY OF PREMISES

(57) The proposed method comprises: preprocessing respective operational graph data (111-114) related to the technical operations and collected in each of the premises (100, 200) by each of a plurality of parties operating the respective premise (100, 200) using a privacy-preserving multi-party computation technique to obtain preprocessed operational graph data (211-214); and using decentralized federated learning with a privacy-preserving model update method to train the graph neuronal network (3) to provide, in response to the preprocessed operational graph data (211-214) of each of the premises (100, 200) being input, the technical inference (4) as an output. An additional end-to-end privacy preservation technique is applied throughout.

The method ensures privacy of operations of each of the parties to a level sufficient for industrial use.

FIG 1

EP 4 542 450 A1

**Description**

The present invention relates to the field of industrial applications of graph neuronal networks, and more particularly, to a computer-implemented method of training a graph neuronal network, GNN, to derive a technical inference about technical operations in an industrial system comprising a plurality of premises, each premise being operated by a plurality of parties.

The problem of processing and analyzing large-scale, complex, and dynamic data, such as interconnected networks of platform ecosystem data in an industrial system, has been addressed using various graph-based techniques, such as traditional Graph Neuronal Networks (GNNs), Graph Convolutional Networks (GCNs), and Graph Attention Networks (GATs). These methods have achieved some success in handling graph data but may have limitations in addressing heterogeneous graphs, intricate relationships, and scalability efficiently. In terms of privacy concerns, earlier solutions have employed techniques like data anonymization, encryption, and differential privacy to protect sensitive information. However, these methods still often require data centralization, which may not be suitable for customer parties who prefer retaining control over their data within their areas of responsibility within their premises.

It is one object of the present invention to improve the processing of operational data using neuronal networks in an industrial system with multiple premises, each premise being operated by a plurality of parties having limited trust in each other.

According to a first aspect, there is proposed a computer-implemented method of training a graph neuronal network, GNN, to derive a technical inference about technical operations in an industrial system comprising a plurality of premises, each premise being operated by a plurality of parties, the method comprising: a) preprocessing respective operational graph data relating to the technical operations and collected in each of the premises by each of the parties using a privacy-preserving multi-party computation technique to obtain preprocessed operational graph data for each of the premises; b) using decentralized federated learning with a privacy-preserving model update method to train the graph neuronal network to provide, in response to the preprocessed operational graph data of each of the premises being input, the technical inference as an output; wherein an additional end-to-end privacy preservation technique is applied throughout steps a) and b).

Accordingly, step a) enables the different parties to collectively preprocess the graph data, and in particular, to calculate the preprocessed operational graph data of the premise as a function of operational graph data of a plurality of parties of said premise, without revealing their raw training data to each other. Thus, advantageously, the privacy of individual data records is preserved, and confidentiality is maintained. During step b), the parties of the same and of different premises all collaborate on training the graph neuronal network without any of them obtaining partial models that could be used to make inferences about other parties' or premises' data. Thus, advantageously, the privacy of the trained model parameters is preserved, and each party is prevented from gaining insights into the specifics of other parties data. Furthermore, the end-to-end privacy preservation technique adds an additional layer of security and privacy assurance, ensuring comprehensive privacy across the entire process, including data transmission, model updates, and any intermediate steps, and covering for any potential remaining security vulnerability of the privacy-preserving multi-party computation technique of step a) and/or the privacy-preserving model update method of step b).

Thus, advantageously, a robust and secure privacy framework is provided that allows multiple parties operating and multiple premises to collaboratively training a graph neuronal network that can then be employed to obtain technical inferences benefitting each of the parties, while preserving privacy such that none of the parties and no external third party can make an inference about the original training data or the model parameters provided by each of the parties.

Herein, operational graph data may be data representing relationships and interactions between different pieces of equipment within the industrial system.

In particular, the operational graph data is structured as a graph, wherein each node of the graph may represent an entity in the industrial system, such as an equipment and/or a component, and each edge of the graph may represent an interactions or dependencies between two entities, such as a material flow, a temperature reading, a power consumption and so on.

Furthermore, each node and each edge of the operational graph data may include a number of attributes, or features. A node attribute may specify an equipment type, and equipment location, and equipment manufacturer, an equipment status and the like. An edge attribute may specify a data transmission rate, an energy consumption rate, a temperature of pressure reading and the like.

That is, the operational graph relating to the technical operations in the industrial system data may be formed based on: operational parameters of machines, energy consumption measurements, pressure and/or temperature sensor readings, material flow measurements, product quality indicators, and the like.

The preprocessing may comprise any one or more of feature extraction, encoding of data into numerical representations, and normalization, such as scaling of the numerical data to a standard range.

The technical inference may be a prediction relating to one or more of equipment health, maintenance need and the like, such as a prediction of equipment failure and the like.

Examples for a technical inference include a prediction of equipment failure within an industrial facility (system). The technical inference may be based on analyzing operational data obtained from technical equipment in various of the premises within the facility (system).

The technical inference may be a data structure comprising a specification of an inference type, a numerical or binary output value, and optionally also a specification of a confidence level for the prediction.

A premise may be understood as an installation site of equipment. In particular, different premises are physically separated from each other.

A party may be understood as an entity that owns, operates, and operates certain pieces of equipment within one of the premises.

That is, "a premise being operated by a plurality of parties" may be understood as "a premise comprising a plurality of pieces of equipment, wherein different parties each operate one or more of the pieces of equipment of the premise".

According to an embodiment, the graph neuronal network is a graph attention network, GAT.

In particular, a graph attention network is a graph neuronal network that comprises one or more attention mechanisms that allow the nodes of the graph neuronal network to decide, based on learned parameters, how much attention to give to information from other nodes.

The attention mechanism advantageously helps the graph attention neuronal network to focus on the most relevant information when making predictions or inferences.

According to a further embodiment, step b) further comprises employing a graph-partitioning technique to partition the graph neuronal network and training the partitioned graph neuronal network using parallel processing.

According to a further embodiment, the graph partition technique is one of METIS and Louvain.

Thus, advantageously, large-scale graph data can be processed more efficiently in the federated learning step b) thanks to parallel processing.

According to a further embodiment, the decentralized federated learning in step b) uses a FedProx algorithm.

According to a further embodiment, the privacy-preserving multi-party computation technique in step a) is one of SPDZ and GMW protocol.

According to a further embodiment, the preprocessing in step a) comprises one or more of feature extraction, encoding, normalization, feature selection, and missing data handling.

According to a further embodiment, the end-to-end privacy protection technique comprises differential privacy and/or homomorphic encryption.

More particularly, the differential privacy and/or the homomorphic encryption may be employed throughout an entire pipeline that leads from the individual parties' graph operational data to the entire trained graph neuronal network of the entire industrial system.

Differential privacy advantageously enables privacy and deniability of the individual parties' operational graph data while at the same time maintaining the statistical utility of the data for training the graph neuronal network.

Homomorphic encryption advantageously enables operational graph data that is communicated between parties and premises to remain secure in an (untrusted) environment of the industrial system, while at the same type allowing further operations as required for the training of the graph neuronal network to be formed on the encrypted operational graph data.

Any embodiment of the first aspect may be combined with any embodiment of the first aspect to obtain another embodiment of the first aspect.

According to a second aspect, there is proposed a distributed computerized device comprising a graph neuronal network that has been trained according to the method of the first aspect or any one of its embodiments.

The distributed computerized device may comprise a plurality of computerized devices, each being operated by one of the parties on one of the promises, and the plurality of computerized devices may be configured to collectively perform the method of the first aspect and/or any of its embodiment and/or the method of the below-described third aspect.

Accordingly, in the first, second or third aspect, the graph neuronal network may comprise a plurality of graph neuronal network portions distributed among the plurality of computerized devices such that none of the parties has access to the complete graph neuronal network.

According to a third aspect, there is proposed a computer-implemented method of deriving a technical inference about technical operations in an industrial system comprising a plurality of premises each being operated by a plurality of parties, the method comprising: c) training a graph neuronal network using the method of any one of claims 1 to 9; d) preprocessing respective further operational graph data collected in each of the premises by each of the parties using a privacy-preserving multi-party computation technique to obtain preprocessed further operational graph data for each of the premises; e) inputting the further operational graph data of each of the premises to the graph neuronal network and obtaining, in response thereto, the inference as output from the graph neuronal network; wherein the additional end-to-end privacy preservation technique is applied throughout steps a) to e) .

According to an embodiment, the method of the third aspect further comprises, f) in response to an actionable technical inference being made in step e), automatically performing a corresponding action in the industrial system.

According to a fourth aspect, there is proposed a computer program product comprising a program code for executing the method of the first aspect or the third aspect or any one of the respective embodiments when run on at least one computer.

The computer program product may be a distributed computer program product comprising a plurality of computer program product portions, wherein a respective computer program portion causes a respective computer operated by a respective party on a respective premise to perform a respective portion of the method of the first aspect or the third aspect or any one of the respective embodiments thereof when run on the respective computer.

A computer program product, or a respective computer program product portion, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the method of the first aspect apply mutatis mutandis also to the computerized device of the second aspect, the method of the third aspect and the computer program product of the fourth aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

Fig. 1 shows an industrial system comprising a plurality of premises according to an exemplary embodiment;

Fig. 2 schematically illustrates a graph neuronal network according to the exemplary embodiment;

Fig. 3 schematically illustrates operational graph data according to the exemplary embodiment;

Fig. 4 schematically shows the structure of a graph neuronal network layer of the graph neuronal network of Fig 2;

Fig. 5 illustrates an update rule for the graph neuronal network layer of Fig. 4;

Fig. 6 visualizes steps of a training method according to the exemplary embodiment; and

Fig. 7 visualizes steps of an inference method according to the exemplary embodiment.

In the Figures, like reference numerals designate like or functionally equivalent elements, unless otherwise indicated.

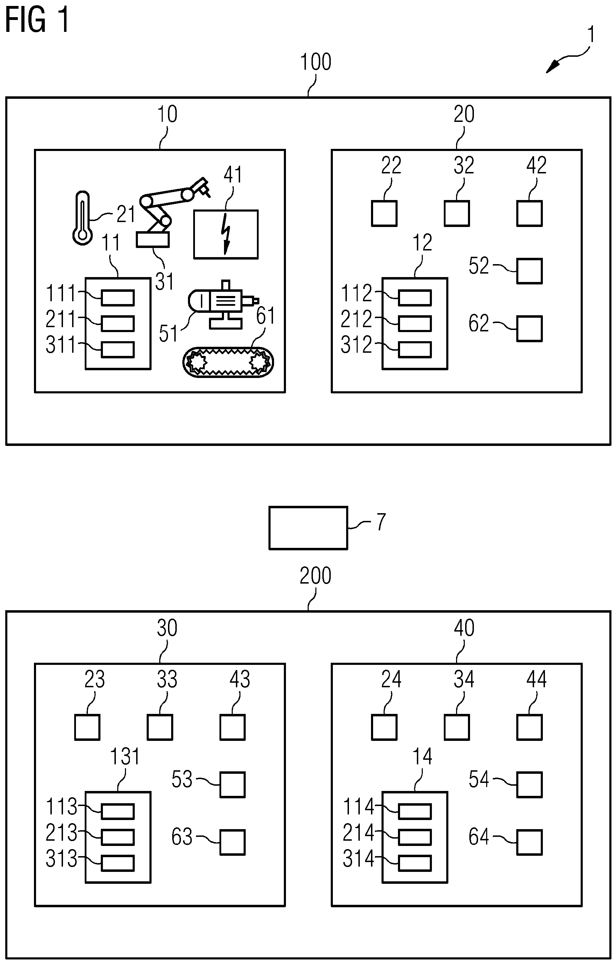

Fig. 1 shows an industrial system 1. The industrial system 1 is distributed accross (comprises) a plurality of premises 100, 200. Each of the premises 100, 200 comprises a plurality of party areas 10, 20, 30, 40. A respective party area 10, 20, 30, 40 comprises pieces of equipment 11-64 operated by a respective same party.

For example, the party area 10 of the first premise 100 comprises, as pieces of equipment, a computing device 11, a temperature sensor 21, a robot 31, a power supply 41, a pump 51 and a conveyor belt 61, all of which are operated by a first party owning party area 10. Similarly, a second party owning party area 20 operates computing device 12 and equipment 22, 32, 42, 52, 62, which may be the same equipment or different equipment as the equipment 21, 31, 41, 51, 61. Similarly, a third party and a fourth party, owning party areas 30 and 40, respectively, respectively operate computing devices 13, 14 and equipment 23, 33, 43, 53, 63 and 24, 34, 44, 54, 64, respectively.

Here and in the following, the terms "party" and "party area" may be used exchangeably to designate ownership of, responsibility for, and the like, of respective equipment 11-64 and the associated operational data obtained from such equipment.

Herein, it is noted that premises 100 and premise 200 are separated physically, i.e., relate to different physical locations and/or sites. To the contrary, the party areas 10, 20; 30, 40 within a respective premise 100, 200 do not necessarily need to be separated physically. Rather, equipment 11-64 operated by different parties of a same premise 100, 200 may be freely arranged, interconnected, interspaced and otherwise mingled and mixed within the respective premise 100, 200. That is, contrary to the term "premise", which describes a physical site, the term "party area" 10, 20, 30, 40 merely refers to a logical separation into different areas of responsibility and for operation, data ownership and the like, and does not refer to a specific physical installation site.

The computing devices 11, 12, 13, 14 of the respective party areas 10, 20, 30, 40 are communicably connected via a wired or wireless network.

The industrial system 1, optionally, further comprises a central entity 7. The central entity 7 is a computing device that is communicably connected via a wired or wireless network with the computing devices 11, 2, 13, 14 of the respective party areas 10, 20, 30, 40 of the respective premises 100, 200.

The central entity 7 may be provided independently of the premises 100, 200 as shown in the figures, or may be provided in one of the premises 100, 200, and/or may be embodied as a further unit of one of the computing devices 11, 12, 13, 14. The central entity 7 may be operated by one of the parties operating the party areas 10-40, or may be operated by a further independent party.

Each computing device 11-14 in each of the party areas 10, 20, 30, 40 stores respective later-described operational graph data 111-114, obtains, by a later-described method, respective preprocessed operational graph data 211-214 of its respective premise 100, 200, is configured to participate in decentralized federated learning so as to train a graph neuronal network comprised by the plurality of neuronal network portions 311-314 of each of the computing device 11-14 of each of the parties based on the preprocessed operational graph data 211-214 and/or to participate in collectively inputting the preprocessed operational graph data 211-214 into the trained graph neuronal network constituted by the plurality of graph neuronal network portions 311-314 to obtain a technical inference about technical operations in the industrial system 1.

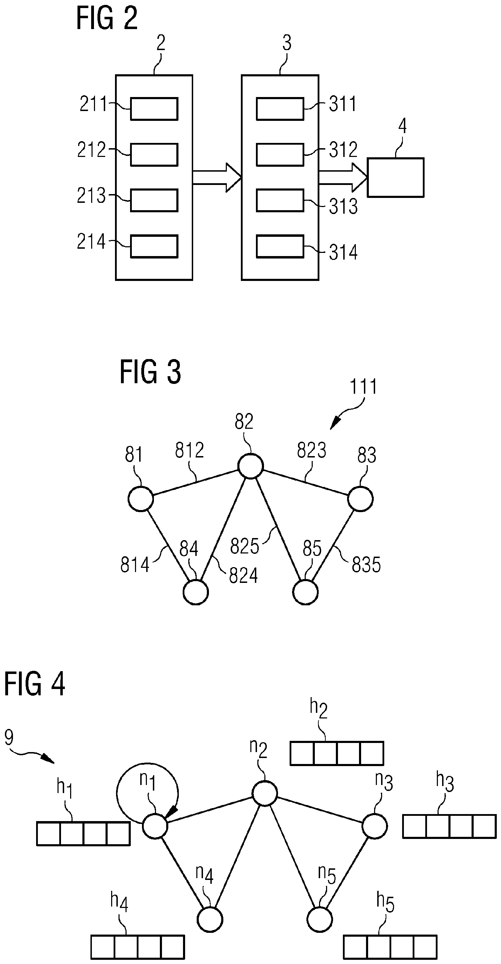

Fig. 2 schematically illustrates a graph neuronal network 3 according to the exemplary embodiment. Reference is made to Fig. 1 and Fig. 2.

The graph neuronal network 3 comprises (is constituted by) the plurality of graph neuronal network portions 311-314. As can be seen in Fig. 1, each of the graph neuronal network portions 311-314 is stored on a respective one of the computing devices 11-14 in one of the party areas 10-40. That is, the graph neuronal network 3 is stored in a distributed manner such that none of the parties 10-40 has access to the whole of the graph neuronal network 3.

The graph neuronal network 3 comprises trainable components to be described later in detail that can be trained - through collective action of the computing devices 11-14 to be described later - such that upon input - through collective action of the computing devices 11-14 to be described later - of preprocessed operational graph data 211-214, the trained graph neuronal network 3 outputs a technical inference 4 about operations in the industrial system 1.

Fig. 3 schematically illustrates operational graph data 111 according to the exemplary embodiment. Reference is made to Fig. 1 and Fig. 3.

The operational graph data 111 is data collected, by the computing device 11, about technical operations of the equipment 21, 31, 41, 51, 61 that is operated by the party owning the party area 10 in the premise 100, for example through monitoring of these technical operations.

Monitoring the technical operations of the equipment 21-61 may include, for example, monitoring operational parameters of equipment, such as the pump 51, a motor of robot 31, the conveyor belt 61, and the like, so as to ensure these operational parameters are within normal operating ranges; wherein deviations from the normal operating ranges may indicate a potential issue.

Monitoring the technical operations of the equipment 21-61 may include monitoring power consumption patterns of power consumed by a respective equipment 11, 21, 31, 51, 61 from the power supply 41. An abnormal power consumption pattern may indicate inefficiency of malfunction of the respective equipment 11-61.

Monitoring the technical operations of the equipment 21-61 may include monitoring operational temperatures or pressures, such as using the temperature sensor 21, so as to ensure that temperature- and/or pressure-sensitive processes are maintained within specified range to prevent overheating or undercooling of materials.

Monitoring the technical operations of the equipment 21-61 may include monitoring the movement of materials through the facility (party area 10 and/or premise 100) to identify bottlenecks or delays in the production process.

Monitoring the technical operations of the equipment 21-61 may include tracking quality of products at different stages of production by the equipment 11-61 so as to identify defects or deviations from quality standards.

As to the structure of the operational graph data 111 obtained through such monitoring of technical operations in the industrial system 1, the operational graph data 111 is comprised by a plurality of nodes 81-85 interconnected by a plurality of edges 812, 814, 823, 824, 825, 835. Each node in the operational graph data 111 represents a specific entity, such as the equipment 21-61, within the party area 10 within the premise 100 of the industrial system 1. Each edge 812-835 represents a relationship, dependency or interaction between the entities represented by the nodes 81-85.

Therein, each node 81-85 and each edge 812-835 may be associated with one or more attributes, or features, such as equipment type, location, manufacturer, current status, data transmission rates, energy consumption rates, temperature measurements, and the like.

In the present example, node 81 represents the robot 31, node 82 represents the power supply 41, node 83 represents the temperature sensor 21, node 84 represents the conveyor belt 61, and node 85 represents the pump 51.

In the present example, edge 845 represents a flow of material from the pump 51 represented by node 85 to the conveyor belt 61 represented by node 84; edge 813 represents temperature readings from temperature sensor 21 represented by node 83 provided to the robot 31 represented by node 81; edge 812 represents power consumption data about a power consumption of robot 31 represented by node 81 from the power supply 41 represented by node 82; and so on.

The operational graph data 111 has been described as an example, but it will be appreciated that the operational graph data 112, 113, 114 of the other computing devices 12, 13, 14 in the other party areas 20, 30, 40 may have a same or a similar semantics and structure.

That is, it would be conceivable that each party 10-40 could itself compare its respective obtained operational graph data 111-114 with predetermined thresholds set by human experts of each party. However, it is desired to reduce the necessity of manually setting threshold value and to use artificial intelligence to make technical inferences about the collected operational graph data 111-114. Moreover, it is desired that different parties 10-40 may benefit from insight gained through use of artificial intelligence by the other parties, however, without compromising confidentiality of the operational data 111-114 of the respective party 10, 20, 30, 40.

Therefore, as described later with greater detail, each computing device 11-14 provides its respective operational data 111-114 to a specifically trained graph neuronal network 3 (Fig. 3) to obtain a technical inference 4 (Fig 3) about technical operations in the industrial system 1 in a privacy preserving manner.

Further with reference to Fig. 1 and Fig. 2, the technical inference 4 is now described.

The technical inference 4 is any inference that provides an insight about a technical operation being carried out in the industrial system 1. For example, the technical inference 4 may be a prediction of equipment failure within the industrial system 1, based on analyzing, through the graph neuronal network 3, (preprocessed) operational graph data 211-214 from various premises 100, 200 within the industrial system 1. For example, the technical inference 4 may also be a proposal on how to optimize operational parameters of the technical operations so as to enhance efficiency and reduce downtime. That is, the technical inference 4 may be a prediction related to equipment health, maintenance needs and/or optimization potential.

Merely as one example, the technical inference 4 may be a data structure comprising: a) an inference type identifier that identifies a type of the technical inference 4 (such as: prediction of a probability of equipment failure within a specific time frame); b) an inference value, such as a floating point value indicating a probability, or a binary value, indicating impeding failure or no impeding failure, and the like; c) optionally, a confidence level indicator, specifying a measure of confidence indicating how certain the graph neuronal network 3 is about the prediction. Such a technical inference 4 data structure may be converted into a technical inference 4 represented by a human-readable sentence sch as "Equipment 51 (pump 61) is predicted to have a 20% probability of failure within the next 48 hours with a confidence level of 85%".

Fig. 4 schematically shows the structure of a graph neuronal network layer 9.

The graph neuronal network layer 9 is one layer of a multilayered graph neuronal network 3 (Fig. 2). The graph neuronal network layer 9 comprises a number of nodes $n_1$-$n_5$, and each node is associated with a feature vector $h_1$ - $h_5$, and some of the nodes $n_1$-$n_5$ are connected by respective edges.

In Fig. 4, each feature vector $h_1$ - $h_5$ initially comprises four feature values, as symbolized by the square boxes shown in Fig. 4 for feature vector $h_1$ as an example.

If the graph neuronal network layer 9 is the input layer of the graph neuronal network 3 (Fig. 2), the skilled person will appreciate that the operational graph data 111 (Fig. 3), i.e. the attributes of the nodes 81-85 (Fig. 3) and the attributes of the edges 812-835 (Fig. 3), can be converted into (mapped onto) a graph comprising the nodes $n_1$-$n_5$, the edges connecting those nodes $n_1$ to $n_5$ corresponding to the edges 812-835 connecting the nodes 81-85, and the set of feature vectors $h_1$-$h_5$, wherein the feature vectors $h_1$-$h_5$ comprise both the node 81-85 attributes and the edge 812-835 attributes as feature values.

The graph neuronal network layer 9 is configured to update the graph constituted by the nodes $n_1$-$n_5$, feature vectors $h_1$-$h_5$ and the connecting edges in a message passing manner, wherein each feature vector $h_1$-$h_5$ of each node $n_1$-$n_5$ is updated based on the values of its neighboring (connected neighbors) nodes $n_1$-$n_5$.

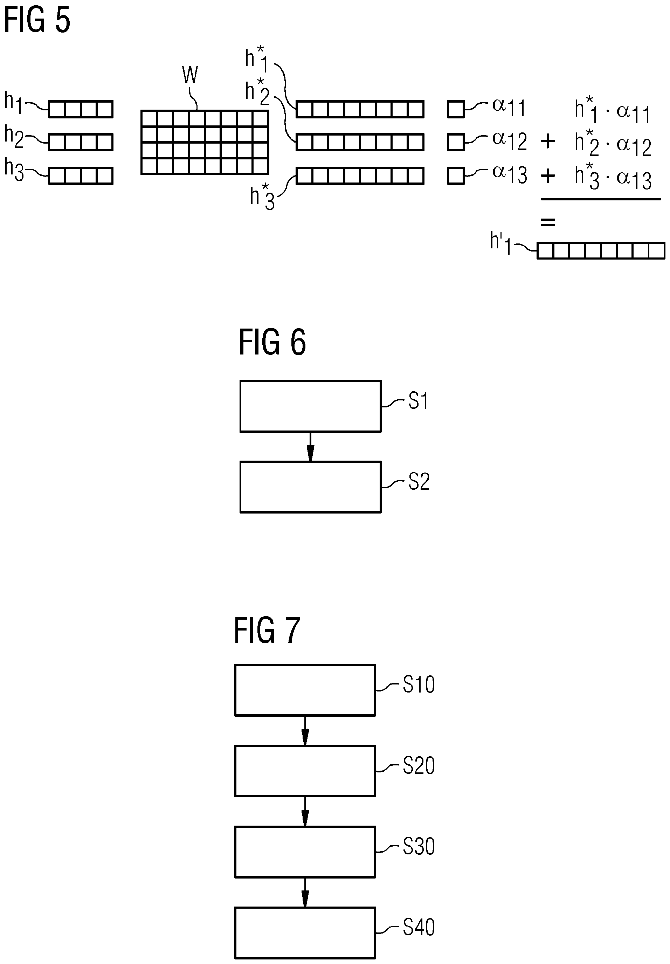

Fig. 5 illustrates an update rule for the graph neuronal network layer 9 of Fig. 4.

A rule of computing the updated graph based on the graph 9 shown in Fig. 4 can be written as follows:

$$ h'_i = \sigma \left( \sum_{j \in N(i)} \alpha_{i,j} \cdot W \cdot h_j \right) $$

Herein, $h'_i$ is the updated feature vector for node $n_i$, $h_j$ is the current feature vector for node $n_j$, W is a matrix that constitutes a learnable linear transformation, $\alpha_{i,j}$ are attention coefficients, the sum is performed only over such nodes $n_j$ that are edge-connected neighbors N(i) of node $n_i$, and $\sigma$ is a sigmoid activation function that normalizes the output of the sum.

For now, it is assumed that all $\alpha_{i,j}$ are one. In this case, the graph neuronal network layer 9 is a simple graph convolutional neuronal network layer without attention mechanism.

A height of the matrix W corresponds to the number of feature entries in each feature vector $h_j$ (4 in the example in Fig. 4) and a width of matrix W corresponds to the desired number of feature entries in each updated feature vector $h'_i$ (8 in the exempla in Fig. 4). That is, the number of features in the updated feature vectors $h'_i$ may or may not be the same as the number of features in the original feature vectors $h_j$.

The update rule is visualized in Fig. 4 for the case of obtaining an updated feature vector $h'_i$ for node $n_1$.

That is, the feature vectors $h_1$, $h_2$, $h_3$ of width 4 of all edge-connected neighbors $n_1$, $n_2$, $n_3$ of node $n_1$ are each multiplied with the 4x8 matrix W to obtain vectors $h_1^*$, $h_2^*$, $h_3^*$ of width 8 respectively. It is noted that node $n_1$ has a circular edge referring itself, therefore, node n1 is considered to be also a neighbor of node $n_1$ itself. Each vector $h_1^*$, $h_2^*$, $h_3^*$ is then multiplied with an attention coefficient $\alpha_{i,j}$ that specifies how much attention should be given when updating the feature vector of node $n_i$ based on the values of node $n_j$. In case no attention mechanism is used, all $\alpha_{i,j}$ are equal to one, i.e., the multiplication may be omitted. Finally, the optioned products of vectors $h_j^*$ (=W*$h_j$) with the attention coefficients $\alpha_{i,j}$ are summed up, the sigmoid function is applied to the sum, and the updated feature vector $h'_i$ is obtained.

Herein, the matrix W constitutes a learnable element that can be trained through federated learning in the manner described below.

A graph neuronal network layer 9 that is a graph convolution neuronal network has been described. Now, a graph attention neuronal network is going to be described.

One potential attention mechanism that can be used so that the graph neuronal network layer 9 is a graph attention neuronal network layer 9 having an attention mechanism is given by:

$$\alpha_{i,j} = \text{softmax}_j\left(\text{LeakyReLU}\left(w_a^T\left[W \cdot h_i || W \cdot h_j\right]\right)\right)$$

Herein, the | | operator denotes the concatenation of the vectors $h_j^*$=W*$h_j$ and $h_j^*$=W*$h_j$, $w_a$ is a single layer neuronal network, i.e. a learnable weight vector, LeakyReLU is an activation function that emphasizes positive correlations and down-tunes negative correlations, and softmax is the Softmax functions that normalizes the output to the range from 0 .. 1.

The weight vector $w_a$ enables learning of how much attention each node $n_i$ should give to the values of its neighbouring nodes $n_j$.

A width of the weight vector $w_a$ is twice the width of the vectors $h_{i,j}^*$=W*$h_{i,j}$, i.e., 16 in the example illustrated in Fig. 5

That is, the weight vector $w_a$ constitutes a further learnable element that can be trained through federated learning in the manner described below.

A plurality of graph neuronal network layers 9 may be interconnected to form the graph neuronal network 3 (Fig. 3), that is, a plurality of update steps may be performed and/or further neuronal network layers with the same or a different graph structure may be populated based on the updated feature vectors of the respective preceding graph neuronal network layer 9, and a final layer of the graph neuronal network 3 (Fig. 3) may comprise an output neuron that has an associated feature vector the structure of which matches the technical inference 4 (Fig. 3) as described hereinabove.

With the mathematical foundations of the GAT neuronal network layer 9 as explained hereinabove, operation of the GAT may be described as follows:

At each layer 9 of the graph attention network 3, information flows between the nodes $n_1$ to $n_5$ through the one or more attention mechanisms. The nodes $n_1$ to $n_5$ of each layer 9 send and receive information based on their connections (edges), and they use these connections to gather insights from neighboring nodes $n_1$-$n_5$. The nodes $n_1$-$n_5$ can adjust their attention to weigh information from different neighboring nodes differently, depending on what is most relevant for the task that is being learnt. The GAT then aggregates information for multiple graph attention neuronal network layers 9, gradually building a more comprehensive understanding of the data. This may be understood as a multi-step conversation between the nodes $n_1$-$n_5$, wherein the nodes $n_1$-$n_5$ exchange information and update their own understanding based on what they have heard from their neighbors. Finally, an output, such as the technical inference 4, is produced, which is the result of the GAT's 3 collective understanding of the input preprocessed graph operational data 211-214, as refined through the multiple layers 9 of information exchange.

While the benefits of using a graph attention neuronal network 3 for making predictions in realms such as language processing and the like are known, an obstacle to the industrial application of graph attention neuronal network 3 so far has been the problem that the training data for training the graph neural network 3 (Fig. 3) and/or the input data for applying the graph neuronal network 3, i.e. the graph operational data 111-114 (Fig. 2, 3), in an industrial context contains sensitive data about hardware configuration of the equipment 11-64 of the various parties 10-40, which the respective party 10-40 may not wish to disclose with the other parties 10-40 and/or across premises 100-200. Disclosure of the graph operational data 111-114, or of model parameters obtained through training a neuronal network with said graph operational data 111-114, may not only lead to the disclosure of trade secrets, but may also expose operational vulnerabilities and therefore negatively impact the operational safety and security of the equipment 11-64 of the respective party 10-40.

In view of this, the inventors propose a specific training method and a specific inference method that addresses the above-mentioned privacy concerns.

Fig. 6 visualizes steps of a training method according to the exemplary embodiment. Reference is made to Figs. 6, 1 and 2.

In step S1 of the training method, respective operational graph data 111-114 related to the technical operations and collected in each of the premises 100, 200 by each of the parties 10-40 is preprocessed using a privacy-preserving multi-party computation technique to obtain preprocessed operational graph data 211-214 for each of the premises 100, 200.

The preprocessing that is carried out comprises making raw operational graph data fit for use by the GNN 3. The preprocessing my comprise feature extraction, wherein relevant features are extracted from the raw data. For example, from raw temperature sensor readings, features like maximum temperature, minimum temperature, and average temperature over a specific time window may be computed. The preprocessing may comprise encoding, in which categorial data is converted into numerical representations. For example, equipment types (such as pump, conveyor belt, and the like (might be encoded into numerical values. The preprocessing may comprise normalization, in which numerical data is scaled to a standard range, such as the range from 0 ... 1, to ensure uniformity of the input data. The preprocessing may also comprise feature selection and missing data handling.

In the preprocessing step S1, each party's 10-40 computing device 11-14 processes its local portion of the operational graph data 111-114 to obtain the preprocessed operational graph data 211-214, which is a function of the raw operational graph data 111-114. Fig. 1 shows the preprocessed operational graph data 211-214 being evenly distributed among all the party areas 10-40, however this does not mean that there is a 1:1 correspondence between respective raw operational graph data 111-114 and the corresponding preprocessed operational graph data 211-214. Rather, within each premise 100, 200, each piece of the preprocessed operational graph data 211-214 of a given party area 10, 20, 30, 40 can be a function of on raw operational graph data 111-114 of the same as well as of other party areas 10, 20, 30, 40 of the same premise 100, 200. It is further also conceivable that within each premise 100, 200, each piece of preprocessed operational data 211-214 is an identical copy of the complete preprocessed operational data (all the preprocessed operational data) of the respective premise 100, 200, or that the preprocessed operational graph data 211-214 of a given premise 100, 200 is not stored on all computing devices 10-40 of the premise 100, 200, but only one on or more such computing devices.

Thus, operational graph data 111-114 of the individual parties 10-40 of a respective premise 100, 200 needs to be shared within the premise 100, 200 to carry out the preprocessing.

Therefore, the preprocessing is carried out using a privacy-preserving multi-party computation technique. Therein, the operational graph data 111-114 remains in a state of being encrypted or obfuscated during the preprocessing computations so as to protect privacy. This is achieved through techniques like, merely as an example, Secure Multi-Party Computation (SMPC) (see literature [2]), which ensures that each of the parties 10-40 can contribute raw operational graph data 111-114 without revealing it in its raw form. Further examples for a privacy-preserving multi-party computation techniques include SPDZ (see literature [7]) and GMW (see literature [8]) or any of the later-published derivatives thereof.

As such, in step S1, the parties 10-40 of each premise 100, 200 can collectively preprocess the operational graph data 111-114 without revealing their raw training data to each other. That is, advantageously, the privacy of individual raw data records is preserved, and confidentiality is maintained.

In Step S2 of the training method, decentralized federated learning with a privacy-preserving model update method is used to train the graph neuronal network 3 such that the graph neuronal network 3 acquires the capability to provide, in response to the preprocessed operational graph data 211-214 of each of the premises 100, 200 being input, the technical inference 4 as an output.

As shown in Fig. 1, the graph neuronal network 3 (Fig. 3) is distributed across the different computing devices 11-14 of the different parties 10-40 in the different premises 100, 200 as individual graph neuronal network portions 311-314.

In Step S2, the parties 10-40 update their respective local graph neuronal network portion 311-314 based on the preprocessed operational graph data 211-214. The parties 10-40 may then contribute their local updates of the graph neuronal network portion 311-314 to the central entity 7 in a privacy-preserving manner which combines the different local updates to generated updated graph neural network portions 311-314 that are transmitted back to the individual computing devices 11-14. Alternatively, no central entity 7 may be used, and the computing devices 11-14 of the different parties 10-40 may collectively compute the updated graph neuronal network portions 311-314 without exposing their local raw updates.

An example of privacy-preserving federated training of a graph neural network is given in literature [3]. A further example is the FedProx algorithm of literature [4].

Additionally, during the data transmissions between the computing devices 11-14 and, optionally, the central entity 7, the transmitted data may be encrypted using cryptographic protocols, such as secure sockets layer (SSL) or transport layer security, TLS, to protect against eavesdropping.

As such, during step S2, the parties 10-40 collaborate on training the graph neuronal network 3 without any of the parties 10-40 ever obtaining a partial model that could be used to make inferences about the other parties' 10-40 data.

Thereby, advantageously, privacy of the trained model parameters is preserved, and any party 10-40 is advantageously prevented from gaining insights into the specifics of the other parties' 10-40 data.

Preferably, in step S2, a graph partitioning technique, such as METIS (see literature [5]) and/or Louvain, (see literature [6]) is employed to partition the graph neuronal network 9 and to train the partitioned graph neuronal network 9 using parallel processing, to enable better scalability for large datasets.

In addition to the privacy measures described for step S1 and step S2, at least one additional end-to-end privacy preservation technique is applied throughout steps S10 and S20.

The end-to-end privacy preservation technique[s] applied ensure advantageously that data remains private even during computation and model updates and cover for any remaining security vulnerability in the privacy-preserving multi-party computation technique of step S1 and/or the privacy-preserving model update method of step S2.

One or more of the following end-to-end privacy preservation techniques may be used:

Data encryption may be used such that, before data is transmitted between computing devices 11-14 in steps S1 and S2, the date to be transmitted is encrypted using strong encryption techniques, such as, for example, AES encryption. This encryption additionally ensures that data remains confidential during transmission.

Model parameter encryption may be used. That is, when model updates (updated graph neural network portions 311-314) are transmitted between the computing devise 11-14 in step S2, the model parameters are also encrypted.

Furthermore, differential privacy measures may be applied end-to-end. That is, during the preprocessing in step S1, differential privacy techniques may be applied. Such techniques may introduce noise or perturbations to the operational graph data 111-114 so as to protect the individual data point's privacy. In this way, advantageously, a risk of reidentification of individuals or entities represented in the operational graph data 111-114 is reduced or prevented.

Still further, homomorphic encryption may be applied. More specifically, during the federated learning process in step S2, by virtue of homomorphic encryption, computations may be performed on encrypted data without ever revealing the data's contents. Therefore, advantageously, the parties 10-40 can collectively update the graph neuronal network 3 while maintaining full privacy of their individual raw graph operational data 111-114.

As a result of performing the proposed training method, the computing devise 11-14 will comprise corresponding graph neuronal network portions 311-314 of the trained graph neuronal network 3. It is noted that the computing devices 11-14 may be regarded as constituting a distributed computerized device comprising a graph neuronal network 3 that has been trained according to the proposed training method.

In summary, according to the proposed training method, each computing device 11-14 of each of the parties 10-40 on each of the premises 100, 200 stores its own operational graph data 111-113 locally in an encrypted state, so as to maintain its privacy. During transmission of data between the party areas 10-40 and/or premises 100, 200 and or between the party areas or premises 100, 200 and the central entity 7, if used, the transmitted data remains encrypted throughout the transmission. Model updates, which include updated parameters of the graph neural network portions 311-314, are also encrypted during transmission between the computing devices 11-14 and/or the central entity 7. Differential privacy and/or homomorphic encryption are additionally applied to the data and computations during preprocessing in step S1 and during federated learning in step S2, respectively. Thereby, advantageously, sensitive operational graph data 111-114 and model parameters of the graph neuronal network portions 311-314 remain private and secure throughout the entire training method. Privacy is improved to a level that is acceptable for an industrial scenario.

More particularly, the privacy objectives are achieved by the different steps of the proposed training method as follows:

Step S1 ensures privacy of raw training data. That is, this step ensures that the parties 10-14 can collectively preprocess the raw graph operational data 111-114 without revealing their raw training data to each other. Step S1 preserves the privacy of individual data records and maintains confidentiality.

Step S2 ensures privacy of the partial trained models. During step S2, the parties 10-14 collaborate on training the model, i.e. the graph neuronal network 3, without any of the parties 10-14 obtaining partial models that could be used to make inferences about the other parties' 10-40 data. This preserves the privacy of the trained model parameters and prevents any party from gaining insights into the specifics of the other parties' 10-40 data.

The additional end-to-end privacy preservation technique applied through steps S1 and S2 provides a further additional layer of security and privacy assurance. While steps S1 and S2 address the privacy of raw data and partial models, the end-to-end privacy preservation ensures comprehensive privacy across the entire process, including data transmission, model updates, and any intermediate steps.

The proposed training method thus provides both data transmission privacy, model update privacy and a comprehensive privacy assurance.

That is, end-to-end privacy preservation techniques ensure that data remains confidential during transmission between parties 10-40 and computing devise 111-114. Even if encrypted data is intercepted during transmission, it remains protected.

Model parameters and updates are also encrypted to prevent any potential inference about the model's specifics. Even if the model updates are intercepted, they cannot be used to reconstruct or infer the underlying data (raw graph operational data 111-114).

By employing a holistic approach to privacy preservation, the proposed training method ensures that privacy is maintained at every step of the process, from data processing (S1) to model training (S2), transmission, and beyond.

A synergistic effect is achieved in that steps S1 and S2 address specific privacy concerns related to raw data and partial models, while the end-to-end privacy preservation feature ensures that privacy is preserved comprehensively, covering all remaining potential privacy vulnerabilities in the steps S1 and S2 of the training method. As such, a more robust and secure privacy framework for the entire process is advantageously provided.

Fig. 7 visualizes steps of an inference method according to the exemplary embodiment. Reference is made to Figs. 7, 1 and 2.

In step S10, the graph neuronal network 3 is trained using the training method that has been described above in connection with Fig. 6. Step S10 may be carried out during live operation of the industrial system 1 and/or during a controlled training and testing operation of the industrial system 1.

The further steps of the inference method described below are preferably carried out during live operation of the industrial system 1.

In step S20, respective further operational graph data 111-114 relating to the technical operations in the industrial system 1 and collected in each of the premises 100, 200 by each of the parties 10-40 is preprocessed using a privacy-preserving multi-party computation technique to obtain preprocessed fur-their operational graph data 211-214 for each of the premises 100, 200. Step S20 may be carried out in the same manner as step S1 of the proposed training method.

In step S30, the preprocessed further operational graph data 211-214 of each of the premises 100, 200 is inputted to the graph neuronal network 3. That is, the computing devices 11-14 collectively input the respective preprocessed further operational graph data 211-214 into the respective graph neuronal network portions 311-314. The computing devices 11-14, and optionally also the central entity 7, collectively, and in a privacy-preserving manner, operate the graph neuronal network 3 to obtain the technical inference 4 as output from the graph neuronal network 3.

Therein, at least one or more of the above-described end-to-end privacy preservation techniques is applied not only during the training step S10, but also throughout the further steps S20 and S30.

Thereby, a technical inference 4 about an entire industrial system 1 may be obtained without any of the parties 10-40 of any of the premises 100, 200 having to worry about a breach of privacy of their operational graph data 111-114 and/or model parameters derived therefrom.

In optional step S40, if an actionable technical inference 4 has been made in step S30, one or more of the computing devices 111-114 and the central entity 7 cause a corresponding action to be performed automatically in the industrial system 1.

An actionable technical inference 4 may be, for example, an indication that predictive maintenance should be carried out, an indication that a failure of one of the pieces of equipment 11-64 or one of the components thereof is imminent, and the like.

The corresponding action may include one or more of: outputting of an alarm signal to be acted upon by a human operator; causing automated shutdown of an equipment 11-64 or a component thereof failure of which is imminent, causing automated replacement of a component or of a piece of equipment 11-64 failure of which is imminent and/or which requires predictive maintenance; initiating an automated test sequence, regeneration sequence and the like of a piece of equipment 11-64 failure of which is imminent or which requires predictive maintenance, automatically enabling a security barrier, automatically ordering spare parts to be delivered, and the like.

In particular, the corresponding action may be a technical action that is performed automatically.

Although the present invention has been described in accordance with an exemplary embodiment, it is obvious for the person skilled in the art that modifications are possible in all embodiments. The scope of protection is only limited by the independent claims.

The central entity 7 is optional.

The numbers of parties (party areas) 10-40, premises 100, 200, computing devices 111-114 and equipment 11-64 are merely illustrative and any number of the respective entities may be used. In particular, there is also no requirement that the numbers of equipment 10-65 in each of the party areas 10-40 be equal nor that the types of equipment 10-64 in each of the party areas 10-40 be the same.

Independent of the grammatical term usage, individuals with male, female or other gender identities are included within the term.

Literature

[1] Petar Veličković, Guillem Cucurull, Arantxa Casanova, Adriana Romero, Pietro Liò, Yoshua Bengio, "Graph Attention Networks", ICLR 2018 conference paper, https://doi.org/10.48550/arXiv.1710.10903

[2] Elkoumy, G., Fahrenkrog-Petersen, S.A., Dumas, M., Laud, P., Pankova, A., Weidlich, M. (2020). "Secure Multi-party Computation for Inter-organizational Process Mining." In: Nurcan, S., Reinhartz-Berger, I., Soffer, P., Zdravkovic, J. (eds) Enterprise, Business-Process and Information Systems Modeling. BPMDS EMMSAD 2020 2020. Lecture Notes in Business Information Processing, vol 387. Springer, Cham. https://doi.org/10.1007/978-3-030-49418-6_11

[3] Wu, C., Wu, F., Lyu, L. et al. "A federated graph neural network framework for privacy-preserving personalization." Nat Commun 13, 3091 (2022). https://doi.org/10.1038/s41467-022-30714-9

[4] Tian Li, Anit Kumar Sahu, Manzil Zaheer, Maziar Sanjabi, Ameet Talwalkar, Virginia Smith, "Federated Optimization in Heterogeneous Networks", MLSys 2020, https://doi.org/10.48550/arXiv.1812.06127

[5] Karypis and V. Kumar. "Multilevel k-way Hypergraph Partitioning", pages 343-348, 1999.

[6] V. D. Blondel, J.-L. Guillaume, R. Lambiotte, and E. Lefebvre. "Fast Unfolding of Communities", in Large Networks. Journal of Statistical Mechanics: Theory and Experiment, 2008(10):P10008, 2008.

[7] I. Damgard, V. Pastro, N. P. Smart, and S. Zakarias. Multiparty computation from somewhat homomorphic encryption. In Advances in Cryptology - CRYPTO 2012, volume 7417 of LNCS, pp643-662. Springer, 2012.

[8] O. Goldreich, S. Micali, and A. Wigderson. "How to play any mental game, or a completeness theorem for protocols with honest majority", in 19th Annual ACM Symposium on Theory of Computing (STOC), pages 218-229. ACM Press, 1987

**Claims**

1. A computer-implemented method of training a graph neuronal network, GNN, (3) to derive a technical inference (4) about technical operations in an industrial system (1) comprising a plurality of premises (100, 200), each premise (100, 200) being operated by a plurality of parties, the method comprising:

   a) preprocessing (S1) respective operational graph data (111-114) related to the technical operations and collected in each of the premises (100, 200) by each of the parties using a privacy-preserving multi-party computation technique to obtain preprocessed operational graph data (211-214) for each of the premises (100, 200);
   b) using (S2) decentralized federated learning with a privacy-preserving model update method to train the graph neuronal network (3) to provide, in response to the preprocessed operational graph data (211-214) of each of the premises (100, 200) being input, the technical inference (4) as an output, wherein an additional end-to-end privacy preservation technique is applied throughout steps a) and b).

2. The method of claims 1, wherein the graph neuronal network (3) is a graph attention network, GAT.

3. The method of any one of claim 1 or 2, wherein step b) further comprises employing a graph-partitioning technique to partition the graph neuronal network (3) and training the partitioned graph neuronal network (3) using parallel processing.

4. The method of claim 1, wherein the graph partition technique is one of METIS and Louvain.

5. The method of any one of claims 1 to 4, wherein the decentralized federated learning in step b) uses a FedProx algorithm.

6. The method of any one of claims 1 to 5, wherein the privacy-preserving multi-party computation technique in step a) is one of SPDZ and GMW protocol.

7. The method of any one of claims 1 to 6, wherein the preprocessing (S1) in step a) comprises one or more of feature extraction, encoding, normalization, feature selection, and missing data handling.

8. The method of any one of claims 1 to 7, wherein the end-to-end privacy protection technique comprises differential privacy and/or homomorphic encryption.

9. A distributed computerized device (11-14) comprising a graph neuronal network (3) that has been trained according to the method of any one of claims 1 to 8.

10. A computer-implemented method of deriving a technical inference (4) about technical operations in an industrial system (1) comprising a plurality of premises (100, 200) each being operated by a plurality of parties (10-40), the method comprising:

    c) training (S10) a graph neuronal network (3) using the method of any one of claims 1 to 9;
    d) preprocessing (S20) respective further operational graph data (111-114) relating to the technical operations and collected in each of the premises (100, 200) by each of the parties (100, 200) using a privacy-preserving multi-party computation technique to obtain preprocessed further operational graph data (211-214) for each of the premises (100, 200);
    e) inputting (S30) the preprocessed further operational graph data (211-214) of each of the premises (100, 200) to the graph neuronal network (3) and obtaining, in response thereto, the technical inference (4) as output from the graph neuronal network (3),

wherein the additional end-to-end privacy preservation technique is applied throughout steps a) to e).

11. The method of claim 10, further comprising:
f) in response to an actionable technical inference (4) being made in step e), automatically performing (S40) a corresponding action in the industrial system (1).

12. A computer program product comprising a program code for executing the method of any one of claims 1 to 8 or 10 or 11 when run on at least one computer (11-14, 7).

# FIG 1

## FIG 2

## FIG 3

## FIG 4

FIG 5

$$h^*_1 \cdot \alpha_{11}$$
$$+ \quad h^*_2 \cdot \alpha_{12}$$
$$+ \quad h^*_3 \cdot \alpha_{13}$$

$$=$$

FIG 6

FIG 7

Europäisches
Patentamt

European
Patent Office

Office européen
des brevets

# EUROPEAN SEARCH REPORT

Application Number

EP 23 20 4429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU XUEYU ET AL: "Embedding Communication for Federated Graph Neural Networks with Privacy Guarantees", 2023 IEEE 43RD INTERNATIONAL CONFERENCE ON DISTRIBUTED COMPUTING SYSTEMS (ICDCS), IEEE, 18 July 2023 (2023-07-18), pages 305-315, XP034441959, DOI: 10.1109/ICDCS57875.2023.00029 [retrieved on 2023-10-11] * the whole document * | 1-12 | INV. G06N3/098 |
| A | US 2022/391781 A1 (LITANY OR [US] ET AL) 8 December 2022 (2022-12-08) * paragraph [0005] - paragraph [0025]; figures 1-2 * * paragraph [0088] - paragraph [0092]; figure 5 * | 1-12 | |
| A | WU YULEI ET AL: "Graph Neural Networks for Anomaly Detection in Industrial Internet of Things", IEEE INTERNET OF THINGS JOURNAL, IEEE, vol. 9, no. 12, 1 July 2021 (2021-07-01), pages 9214-9231, XP011910628, DOI: 10.1109/JIOT.2021.3094295 [retrieved on 2021-07-02] * abstract * * section VII; figure 9 * | 1-12 | |

TECHNICAL FIELDS SEARCHED (IPC)

G06N
H04L

-/--

The present search report has been drawn up for all claims

| Place of search | Date of completion of the search | Examiner |
|---|---|---|
| The Hague | 25 March 2024 | Malatesta, Lori |

EPO FORM 1503 03.82 (P04C01)

Europäisches
Patentamt
European
Patent Office
Office européen
des brevets

# EUROPEAN SEARCH REPORT

Application Number

EP 23 20 4429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARMIN DANESH PAZHO ET AL: "A Survey of Graph-based Deep Learning for Anomaly Detection in Distributed Systems", ARXIV.ORG, CORNELL UNIVERSITY LIBRARY, 201 OLIN LIBRARY CORNELL UNIVERSITY ITHACA, NY 14853, 1 June 2023 (2023-06-01), XP091526737, * abstract * * section 5; figure 3 * | 1-12 | |

-----

|  |  |  | TECHNICAL FIELDS SEARCHED (IPC) |
|---|---|---|---|

The present search report has been drawn up for all claims

| Place of search | Date of completion of the search | Examiner |
|---|---|---|
| The Hague | 25 March 2024 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 4429

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2024

| Patent document cited in search report | Publication date | Patent family member(s) | Publication date |
|---|---|---|---|
| US 2022391781 A1 | 08-12-2022 | NONE | |

For more details about this annex : see Official Journal of the European Patent Office, No. 12/82

# EP 4 542 450 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Secure Multi-party Computation for Inter-organizational Process Mining. **ELKOUMY, G.** ; **FAHRENKROG-PETERSEN, S.A.** ; **DUMAS, M.** ; **LAUD, P.** ; **PANKOVA, A.** ; **WEIDLICH, M.** Enterprise, Business-Process and Information Systems Modeling. BPMDS EMMSAD 2020 2020. Lecture Notes in Business Information Processing. Springer, Cham., 2020, vol. 387
- **WU, C.** ; **WU, F.** ; **LYU, L. et al.** A federated graph neural network framework for privacy-preserving personalization. *Nat Commun*, 2022, vol. 13, 3091, https://doi.org/10.1038/s41467-022-30714-9
- **TIAN LI** ; **ANIT KUMAR SAHU** ; **MANZIL ZAHEER** ; **MAZIAR SANJABI** ; **AMEET TALWALKAR** ; **VIRGINIA SMITH**. Federated Optimization in Heterogeneous Networks. *MLSys*, 2020, https://doi.org/10.48550/arXiv.1812.06127
- **KARYPIS** ; **V. KUMAR**. *Multilevel k-way Hypergraph Partitioning*, 1999, 343-348
- **V. D. BLONDEL** ; **J.-L. GUILLAUME** ; **R. LAMBIOTTE** ; **E. LEFEBVRE**. Fast Unfolding of Communities. *Large Networks. Journal of Statistical Mechanics: Theory and Experiment*, 2008, vol. 2008 (10), 10008
- Multiparty computation from somewhat homomorphic encryption. **I. DAMGARD** ; **V. PASTRO** ; **N. P. SMART** ; **S. ZAKARIAS**. Advances in Cryptology - CRYPTO 2012, volume 7417 of LNCS. Springer, 2012, 643-662
- How to play any mental game, or a completeness theorem for protocols with honest majority. **O. GOLDREICH** ; **S. MICALI** ; **A. WIGDERSON**. 19th Annual ACM Symposium on Theory of Computing (STOC). ACM Press, 1987, 218-229